# EUROPÄISCHE PATENTSCHRIFT

(11) **EP 4 426 568 B1**
(45) Veröffentlichungstag und Bekanntmachung des Hinweises auf die Patenterteilung: **27.08.2025**
(21) Anmeldenummer: 22789159.5
(22) Anmeldetag: 21.09.2022
(51) Int. Cl.: B60C 9/18

(54) **FORMSTABILISIERTER FAHRZEUGLUFTREIFEN**
DIMENSIONALLY STABLE PNEUMATIC VEHICLE TIRE
PNEU DE VÉHICULE À STABILITÉ DIMENSIONNELLE

(30) Priorität: 03.11.2021 DE 102021212353
(43) Veröffentlichungstag der Anmeldung: 11.09.2024
(73) Patentinhaber: Continental Reifen Deutschland GmbH, 30175 Hannover (DE)
(72) Erfinder: RÖMER, Justus, 30175 Hannover (DE); STRÜBEL, Christian, 30175 Hannover (DE); PALANICHAMY, Thirumal Alagu, 30175 Hannover (DE); LHUILLIER, Emmanuel, 30175 Hannover (DE); FUNK-FRIEDEK, Sascha, 30175 Hannover (DE)
(74) Vertreter: Continental Corporation
(86) Internationale Anmeldenummer: PCT/DE2022/200220
(87) Internationale Veröffentlichungsnummer: WO 2023/078513

(56) Entgegenhaltungen:
- EP-A1- 3 800 070
- EP-A2- 1 785 284
- DE-B3- 10 358 460
- JP-A- 2000 016 019
- US-A1- 2010 084 069

## Beschreibung

Die Erfindung betrifft einen Fahrzeugluftreifen, insbesondere einen Fahrzeugluftreifen mit einer verringerten Verformung des Laufstreifens im Betrieb.

Moderne Fahrzeugluftreifen sind im Einsatz regelmäßig starken mechanischen Belastungen ausgesetzt. Einen wesentlichen Teil dieser Belastung stellen Impulse dar, welche aus dem Wulstbereich der Fahrzeugluftreifen über die Seitenwand in die oberen, d.h. radial weiter außenliegenden, Teile des Fahrzeugluftreifens geleitet werden. Diese Impulse verursachen im Betrieb eine Deformation der im Fahrzeugluftreifen regelmäßig vorgesehenen Gürtellagen sowie des darüber angeordneten Laufstreifens. Diese Deformation führt in vielen Fällen zu einer unvorteilhaften Erhöhung des Rollwiderstandes des Fahrzeugluftreifens und wird regelmäßig als nachteilig empfunden.

Es besteht ein fortgesetztes Interesse daran, die Propagation der Deformation aus dem Seitenwandbereich in die Gürtellagen und den darüber angeordneten Laufstreifen eines Fahrzeugluftreifens durch geeignete konstruktive Maßnahmen zu reduzieren.

Aus dem Stand der Technik ist der Einsatz von Gürtelumschlägen bekannt, die im Randbereich um eine oder mehrere der Gürtellagen des Fahrzeugluftreifens herumgeschlagen werden und dadurch eine zusätzliche Umfassung der eingesetzten Gürtellage ermöglichen. Beispiele für den Einsatz von Gürtelumschlägen bzw. für Konstruktionen von Fahrzeugluftreifen finden sich beispielsweise in der GB 2253818 B, der JP 3817372 B2, der US 7810534 B2, der US 8783315 B2, der EP 1785284 A2, der JP 2000016019 A, der US 2010/084069 A1, der DE 10358460 B3, der EP 3800070 A1 und der EP 3427978 A1.

Diese konstruktiven Maßnahmen dienen im Stand der Technik dabei jedoch im Wesentlichen anderen Zwecken, insbesondere dem Schutz der Randbereiche des Gürtels sowie der Fixierung des Gürtels im Fahrzeugluftreifen. In Übereinstimmung mit diesen abweichenden Einsatzzwecken reichen die aus dem Stand der Technik bekannten Gürtelumschläge nach Erfahrung der Erfinder nicht aus, um durch ihren Einsatz den nachteiligen Einfluss von Impulsen, welche aus dem Wulstbereich über die Seitenwand an den Reifengürtel übertragen werden, ausreichend zu reduzieren, um damit ein unerwünschtes Verformen des Laufstreifens zu verhindern.

Es war die primäre Aufgabe der vorliegenden Erfindung, die Nachteile des Standes der Technik auszuräumen oder zumindest zu verringern.

Insbesondere war es die Aufgabe der vorliegenden Erfindung, geeignete konstruktive Maßnahmen für Fahrzeugluftreifen zu identifizieren, um den Einfluss von aus dem Wulstbereich über die Seitenwand übertragenen mechanischen Impulsen sowie die dadurch verursachte Deformation des Laufstreifens im Betrieb zu reduzieren. Entsprechend war es die Aufgabe der vorliegenden Erfindung, einen Fahrzeugluftreifen anzugeben, welcher im Betrieb auch unter starken mechanischen Belastungen besonders formstabil bleibt und durch das geringere Ausmaß der Deformation einen ausgezeichneten Rollwiderstand aufweist.

Insoweit war es eine ergänzende Aufgabe der vorliegenden Erfindung, dass die anzugebenden Fahrzeugluftreifen über ausgezeichnete Leistungseigenschaften, insbesondere verbesserte Handhabungseigenschaften, verfügen sollten. Hierbei war es wünschenswert, dass die anzugebenden Fahrzeugreifen unter Verwendung solcher Vorrichtungen und Materialien herstellbar sein sollten, die auch bei herkömmlichen Herstellungsverfahren für Fahrzeugluftreifen zum Einsatz kommen.

Die vorstehend genannten Aufgaben werden durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden.

Die Erfindung betrifft einen Fahrzeugluftreifen, umfassend:
a) eine Reifenkarkasse,
b) eine relativ zur Reifenkarkasse radial außenliegende erste Gürtellage,
c) einen relativ zur Reifenkarkasse und zu der ersten Gürtellage radial außenliegenden Laufstreifen, und
d) ein seitlich am Fahrzeugluftreifen angeordnetes erstes Seitenwandelement, welches sich bis zur Reifenwulst erstreckt,
dadurch gekennzeichnet, dass die erste Gürtellage im Randbereich zumindest abschnittsweise, bevorzugt über den gesamten Umfang, einen ersten Gürtelumschlag aufweist, welcher die erste Gürtellage mit einem Umfassungsbereich in radialer Richtung innen und außen kontaktiert, wobei der erste Gürtelumschlag einen am Umfassungsbereich angeordneten Stabilisationsfortsatz aufweist, der sich so durch den Fahrzeugluftreifen erstreckt, dass der Stabilisationsfortsatz abschnittsweise zwischen der Reifenkarkasse und dem Laufstreifen und abschnittsweise zwischen der Reifenkarkasse und dem ersten Seitenwandelement verläuft, wobei der Stabilisationsfortsatz nahtlos in den Umfassungsbereich übergeht, so dass der Umfassungsbereich und der Stabilisationsfortsatz Teilbereiche des ersten Gürtelumschlags sind, wobei der Stabilisationsfortsatz so angeordnet ist, dass das von der ersten Gürtellage abgewandte Ende des Stabilisationsfortsatzes von der Unterkante der Reifenwulst einen Abstand im Bereich von 0,3*h bis 0,7*h aufweist, wobei h die Höhe des Fahrzeugluftreifens ist, gemessen von der Unterkante der Reifenwulst bis zur Oberseite des Laufstreifens, und
wobei der Umfassungsbereich die erste Gürtellage quer zur Umfangsrichtung in radialer Richtung innen und außen über eine Breite im Bereich von 0,05*b bis 0,2*b, kontaktiert, wobei b die Breite der ersten Gürtellage quer zur Umfangsrichtung ist.

Der grundsätzliche Aufbau von Fahrzeugluftreifen ist dem Fachmann bekannt. Prinzipiell bevorzugt ist ein erfindungsgemäßer Fahrzeugluftreifen, wobei der Fahrzeugluftreifen ein PKW-Reifen ist.

In Übereinstimmung mit dem üblichen Aufbau umfassen auch die Fahrzeugluftreifen der vorliegenden Erfindung eine Reifenkarkasse. Diese Reifenkarkasse besteht regelmäßig aus ein oder mehr Karkasslagen, in welchen Festigkeitsträger in einer sogenannten Gummierung eingebettet sind. Für die überwiegende Zahl der Fälle relevant ist entsprechend ein erfindungsgemäßer Fahrzeugluftreifen, wobei die Reifenkarkasse eine oder mehrere Karkasslagen umfasst, wobei die Karkasslagen eine Vielzahl von in einem Gummiwerkstoff eingebetteten Karkassfestigkeitsträgern umfassen, wobei die Karkassfestigkeitsträger bevorzugt ausgewählt sind aus der Gruppe bestehend aus textilen und metallischen Festigkeitsträgern, besonders bevorzugt textilen Festigkeitsträgern.

Relativ zu der Reifenkarkasse in radialer Richtung außen ist in üblicher Weise der Laufstreifen angeordnet, welcher für den Kontakt mit der Fahrbahn vorgesehen ist. Für die überwiegende Zahl der Fälle relevant ist dabei ein erfindungsgemäßer Fahrzeugluftreifen, wobei der Laufstreifen auf der radial außenliegenden Oberfläche ein Profil aufweist.

Der erfindungsgemäße Fahrzeugluftreifen umfasst zwischen der Reifenkarkasse und dem Laufstreifen zumindest eine Gürtellage. Die Gürtellage umfasst regelmäßig eine Vielzahl von Festigkeitsträgern, die wiederum in einem Gummiwerkstoff eingebettet sind, wobei für Gürtellagen insbesondere der Einsatz von metallischen Festigkeitsträgern vorteilhaft ist, da diese dem Reifen besonders effizient die notwendige Festigkeit bzw. Steifigkeit verleihen können. Für die überwiegende Zahl der Fälle relevant ist folglich ein erfindungsgemäßer Fahrzeugluftreifen, wobei die erste Gürtellage und/oder weitere Gürtellagen, bevorzugt sämtliche Gürtellagen, eine Vielzahl von in einem Gummiwerkstoff eingebetteten Gürtelfestigkeitsträgern umfassen, wobei die Gürtelfestigkeitsträger bevorzugt ausgewählt sind aus der Gruppe bestehend aus textilen und metallischen Festigkeitsträgern, besonders bevorzugt metallischen Festigkeitsträgern.

Neben der Reifenkarkasse, dem Laufstreifen und der Gürtellage umfasst der erfindungsgemäße Fahrzeugreifen auf zumindest einer Seite ein Seitenwandelement, welches sich bis zur Reifenwulst erstreckt. In der überwiegenden Zahl der Fälle wird ein erfindungsgemäßer Fahrzeugluftreifen in beiden Flankenbereichen entsprechende Seitenwandelemente aufweisen, welche besonders bevorzugt gleichartig ausgebildet sein können.

Das erste Seitenwandelement wird in den für die Praxis wohl relevantesten Ausführungsformen zumeist durch eine Reifenseitenwand gebildet. Diese Reifenseitenwand kann einkomponentig, d.h. aus einem durchgehenden Gummiwerkstoff, oder auch mehrkomponentig ausgebildet werden, wobei mehrkomponentige Reifenseitenwände aufgrund der ausgezeichneten Einstellbarkeit der physikalisch-chemischen Eigenschaften inhärent bevorzugt sind. Je nach dem gewählten Reifenaufbauverfahren, wird das erste Seitenwandelement zumeist über den Laufstreifen geschlagen oder von diesem überdeckt. Bevorzugt ist entsprechend ein erfindungsgemäßer Fahrzeugluftreifen, wobei das erste Seitenwandelement eine einkomponentige oder mehrkomponentige, bevorzugt mehrkomponentige Reifenseitenwand ist, und/oder wobei das erste Seitenwandelement im Schulterbereich des Fahrzeugluftreifens den Laufstreifen überdeckt oder vom Laufstreifen überdeckt wird.

In dem erfindungsgemäßen Fahrzeugluftreifen erstreckt sich das erste Seitenwandelement bis zur Reifenwulst. Dies ist in der weit überwiegenden Zahl der aus dem Stand der Technik bekannten Fahrzeugluftreifen der Fall, bei deren Fertigung zumeist die Reifenkarkasse mit der Reifenwulst auf ein vorbereitetes Seitenwandelement aufgesetzt wird, welches anschließend an die Flanke des Fahrzeugluftreifens hochgeschlagen wird.

Die Reifenwulst selbst wird regelmäßig durch den unteren Teil der Reifenkarkasse gebildet, bei dem die eine oder die mehreren Karkasslagen um ein Wulstelement herumgeschlagen werden, welches zumeist einen Wulstkern sowie in vielen Fällen zusätzlich eine Kernfahne aus einem besonders harten Gummiwerkstoff umfasst. In Übereinstimmung mit dem fachmännischen Verständnis bezeichnet der Ausdruck Reifenwulst somit kein isoliertes Bauteil, sondern den durch konstruktive Maßnahmen verdickten Wulst am unteren Rand des Fahrzeugluftreifens, welcher für die Positionierung des Fahrzeugluftreifens auf der Felge vorgesehen ist.

In der Praxis besonders relevant sind Fahrzeugluftreifen, deren Innenraum mit einer luftdichten Innenschicht versiegelt ist. Für die überwiegende Zahl der Fälle relevant ist entsprechend ein erfindungsgemäßer Fahrzeugluftreifen, zusätzlich umfassend eine relativ zur Reifenkarkasse radial innenliegende Reifeninnenschicht.

Dem Fachmann ist bewusst, dass der vorstehend definierte Aufbau im Regelfall zu einem im Wesentlichen radialsymmetrischen Fahrzeugluftreifen gehört. Entsprechend handelt es sich bei den einzelnen Komponenten, insbesondere der Reifenkarkasse, dem Laufstreifen, der ersten Gürtellage und dem ersten Seitenwandelement regelmäßig um ringförmige Elemente, welche im Wesentlichen ebenso radialsymmetrisch sind wie der Fahrzeugluftreifen. Für die überwiegende Zahl der Fälle relevant ist somit ein erfindungsgemäßer Fahrzeugluftreifen, wobei der Fahrzeugluftreifen im Wesentlichen radialsymmetrisch ist.

Ausgehend von dem vorstehend beschriebenen Aufbau eines Fahrzeugluftreifens, welcher aus typischen Reifenkomponenten zusammengesetzt ist, umfassen erfindungsgemäße Fahrzeugluftreifen an der Seite der ersten Gürtellage, d.h. zumindest über einen Teil des Umfangs und bevorzugt über den gesamten Umfang der ringförmigen ersten Gürtellage hinweg, einen ersten Gürtelumschlag. Dieser erste Gürtelumschlag weist einen sogenannten Umfassungsbereich auf, womit der Teil des ersten Gürtelumschlags bezeichnet wird, welcher relativ zur ersten Gürtellage radial innen und radial außen, d.h. in der Querschnittsansicht unterhalb und oberhalb der ersten Gürtellage, verläuft und diese somit umfasst, was bspw. auch als einfassen oder ummanteln bezeichnet werden kann. Dieser Umfassungsbereich des ersten Gürtelumschlags entspricht im Wesentlichen den aus dem Stand der Technik bekannten Gürtelumschlägen und besteht bevorzugt vollständig aus den unterhalb und oberhalb der ersten Gürtellage verlaufenden Teile des ersten Gürtelumschlages, wobei die Abmessungen des Umfassungsbereichs quasi durch den seitlichen Rand der ersten Gürtellage bestimmt werden.

Im klaren Unterschied zu den aus dem Stand der Technik bekannten Gürtelumschlägen umfasst der erste Gürtelumschlag in erfindungsgemäßen Fahrzeugluftreifen jedoch noch einen Stabilisationsfortsatz, welcher am Umfassungsbereich angeordnet ist und nahtlos in diesen übergeht, so dass der Umfassungsbereich und der Stabilisationsfortsatz in Übereinstimmung mit dem fachmännischen Verständnis zweckdienliche Bezeichnungen für Teilbereiche des ersten Gürtelumschlags sind und keine separaten Bauteile bezeichnen.

Erfindungsgemäß erstreckt sich der Stabilisationsfortsatz so durch den Fahrzeugluftreifen, dass er in einem Abschnitt zwischen der Reifenkarkasse und dem Laufstreifen und in einem Abschnitt zwischen der Reifenkarkasse und dem ersten Seitenwandelement verläuft. Für den Fachmann ist angesichts dieser Definition klar, dass sich der Stabilisationsfortsatz vom ersten Gürtelumschlag weg in die Flanke des Fahrzeugluftreifens hinein erstrecken muss, da nur bei dieser Anordnung ein Verlauf erreicht wird, der teilweise zwischen der Reifenkarkasse und dem Laufstreifen und teilweise zwischen der Reifenkarkasse und dem ersten Seitenwandelement verläuft. Der Fachmann versteht, dass sich der Stabilisationsfortsatz des ersten Gürtelumschlags somit aus dem Bereich der Aufstandsfläche des Reifens in die sogenannte Reifenschulter und zumindest teilweise in Richtung des Reifenwulstes erstreckt.

Die Erfinder der vorliegenden Erfindung haben erkannt, dass sich die vorstehend definierten Aufgaben mit dieser Anordnung überraschenderweise lösen lassen. Insbesondere ermöglicht es die Positionierung eines mit der Gürtellage durch den Umfassungsbereich verbundenen Stabilisationsfortsatzes, welcher weit in die Reifenflanke hinein verläuft, d.h. mit einem besonders weit auslaufenden Gürtelumschlag, zuverlässig Impulse und Verformungen abzufangen und abzufedern, welche andernfalls beim Abrollen des Reifens aus dem Wulstbereich über die Seitenwände zum Laufstreifen gelangen würden. Hierdurch ist es möglich, in erfindungsgemäßen Fahrzeugluftreifen beim Einsatz die Verformung des Laufstreifens zu minimieren und hierdurch in vorteilhafter Weise einen niedrigen Rollwiderstand des Reifens zu erreichen. Insbesondere dann, wenn für den ersten Gürtelumschlag ein Material mit einer geringen Hysterese eingesetzt wird, erlaubt es die spezifische Positionierung und Ausgestaltung des ersten Gürtelumschlags die bei der Deformation auftretende Energie effizient zu absorbieren. Hierdurch werden in synergistischer Weise insbesondere auch die Handhabungseigenschaften des Fahrzeugluftreifens verbessert.

Es kann als Vorteil der erfindungsgemäßen Fahrzeugluftreifen gesehen werden, dass die Positionierung des ersten Gürtelumschlags und insbesondere des Stabilisationsfortsatzes dahingehend flexibel ist, dass zwischen dem Stabilisationsfortsatz und den Komponenten, zwischen denen dieser verläuft, auch weitere Komponenten vorgesehen sein können, beispielsweise Verstärkungselemente oder haftvermittelnde Schichten. Mit Blick auf eine optimale Dämpfung der auftretenden Deformationen ist es nach Einschätzung der Erfinder jedoch explizit bevorzugt, wenn der Stabilisationsfortsatz mit so vielen dieser Komponenten wie möglich in direktem Kontakt steht, sodass entsprechend eine stoffschlüssige Verbindung zwischen dem Stabilisationsfortsatz und den in diesen Elementen eingesetzten Gummiwerkstoffen bestehen kann. Insbesondere die Kontaktierung und Anbindung des Stabilisationsfortsatzes an die Reifenkarkasse hat sich hierbei als besonders zielführend erwiesen, sodass ausgezeichnete Ergebnisse vor allem dann erreicht werden, wenn der Stabilisationsfortsatz neben der Reifenkarkasse zumindest eines der beiden anderen Elemente ebenfalls unmittelbar kontaktiert. Bevorzugt ist folglich ein erfindungsgemäßer Fahrzeugluftreifen, wobei der Stabilisationsfortsatz abschnittweise die Reifenkarkasse und/oder den Laufstreifen und/oder das erste Seitenwandelement, bevorzugt die Reifenkarkasse und den Laufstreifen und/oder das erste Seitenwandelement, besonders bevorzugt die Reifenkarkasse, den Laufstreifen und das erste Seitenwandelement, kontaktiert.

Die Erfinder haben erkannt, dass die Abmessungen des ersten Gürtelumschlags, d.h. die Kombination des Umfassungsbereichs und des Stabilisationsfortsatzes, in Abhängigkeit von den sonstigen konstruktiven Gegebenheiten des Fahrzeugluftreifens, insbesondere in Abhängigkeit von der Höhe des Fahrzeugluftreifens ausgelegt werden sollten. Hierfür wird zweckmäßigerweise die Breite des ersten Gürtelumschlags festgelegt, welche quer zur Umfangsrichtung des Fahrzeugluftreifens verläuft. Diese Breite bezeichnet somit im Querschnitt durch einen entsprechenden Fahrzeugluftreifen die Ausdehnung des ersten Gürtelumschlags im Inneren des Fahrzeugluftreifens entlang der Form des Fahrzeugluftreifens. In Übereinstimmung mit dem fachmännischen Verständnis wird diese Breite an der breitesten Stelle bestimmt, d.h. entlang der Reifenform von dem sich am weitesten unter- oder oberhalb der Gürtellage erstreckenden Punkt des Umfassungsbereichs bis zum am weitesten in die Reifenflanke hineinragenden Teil des Stabilisationsfortsatzes. Bevorzugt ist demgemäß ein erfindungsgemäßer Fahrzeugluftreifen, wobei der erste Gürtelumschlag quer zur Umfangsrichtung eine Breite im Bereich von 0,3*h bis 0,7*h, bevorzugt im Bereich von 0,4*h bis 0,6*h, besonders bevorzugt im Bereich von 0,45*h bis 0,55*h, aufweist, wobei h die Höhe des Fahrzeugluftreifens ist, gemessen von der Unterkante der Reifenwulst bis zur Oberseite des Laufstreifens. In Übereinstimmung mit dem üblichen Vorgehen in der Branche wird die Höhe des Fahrzeugluftreifens von der Unterkante der Reifenwulst bis zur Oberseite des Laufstreifens bestimmt.

Im Lichte der vorstehenden Ausführung lassen sich optimale Breiten für den ersten Gürtelumschlag identifizieren, die insbesondere bei Pkw-Reifen sehr gute Dämpfungseigenschaften zeigen. Bevorzugt ist nämlich ein erfindungsgemäßer Fahrzeugluftreifen, wobei der erste Gürtelumschlag quer zur Umfangsrichtung eine Breite im Bereich von 30 bis 140 mm, bevorzugt im Bereich von 40 bis 120 mm, besonders bevorzugt im Bereich von 50 bis 90 mm, aufweist.

Auch wenn es grundsätzlich denkbar ist, dass ein Teil des Gürtelumschlags von außen sichtbar wäre, insbesondere im Übergangsbereich zwischen Laufstreifen und dem ersten Seitenwandelement, ist es mit Blick auf die dämpfende Wirkung explizit bevorzugt, wenn der erste Gürtelumschlag von den übrigen Komponenten des Fahrzeugluftreifens bedeckt wird. Bevorzugt ist somit ein erfindungsgemäßer Fahrzeugluftreifen, wobei der der erste Gürtelumschlag vollständig im Inneren des Fahrzeugluftreifens angeordnet ist.

Den Erfindern ist es gelungen, ausgehend von der Breite der ersten Gürtellage besonders günstige Längen des Umfassungsbereiches, d.h. für die Erstreckung der innen und/oder außen von der ersten Gürtellage verlaufenden Teile des ersten Gürtelumschlags, zu identifizieren und dabei auch solche Werte anzugeben, die für übliche Pkw-Reifen besonders geeignet sind. Erfindungsgemäß ist nämlich ein erfindungsgemäßer Fahrzeugluftreifen, wobei der Umfassungsbereich die erste Gürtellage quer zur Umfangsrichtung in radialer Richtung innen und außen über eine Breite im Bereich von 0,05*b bis 0,2*b kontaktiert, wobei b die Breite der ersten Gürtellage quer zur Umfangsrichtung ist. Bevorzugt ist ein erfindungsgemäßer Fahrzeugluftreifen, wobei der vom Umfassungsbereich umfasste Randbereich der ersten Gürtellage quer zur Umfangsrichtung über eine Breite im Bereich von 5 bis 100 mm, bevorzugt im Bereich von 10 bis 80 mm, besonders bevorzugt im Bereich von 20 bis 60 mm, umfasst wird.

Die Erfinder haben erkannt, dass sich der Stabilisationsfortsatz des ersten Gürtelumschlags zielführenderweise relativ weit in die Flanke des Fahrzeugluftreifens hinein erstrecken sollte, um so idealerweise die gesamte Schulter des Fahrzeugluftreifens zu überdecken. Es ist den Erfindern insoweit gelungen, dies geometrisch durch die Position des Endes des Stabilisationsfortsatzes in Relation zu der Höhe des Fahrzeugluftreifens zu charakterisieren und besonders günstige Bereiche anzugeben, mit denen eine gute Abschwächung der von der Reifenwulst ausgehenden Impulse erreicht werden kann. Wie vorstehend für die Abmessungen, konnten die Erfinder zudem sinnvolle Bereichsangaben für den leistungsfähigen Einsatz in typischen PKW-Reifen identifizieren. Erfindungsgemäß ist ein erfindungsgemäßer Fahrzeugluftreifen, wobei der Stabilisationsfortsatz so angeordnet ist, dass das von der ersten Gürtellage abgewandte Ende des Stabilisationsfortsatzes von der Unterkante der Reifenwulst einen Abstand im Bereich von 0,3*h bis 0,7*h, bevorzugt im Bereich von 0,4*h bis 0,65*h, besonders bevorzugt im Bereich von 0,5*h bis 0,6*h, aufweist, wobei h die Höhe des Fahrzeugluftreifens ist, gemessen von der Unterkante der Reifenwulst bis zur Oberseite des Laufstreifens. Bevorzugt ist ein erfindungsgemäßer Fahrzeugluftreifen, wobei der Stabilisationsfortsatz so angeordnet ist, dass das von der ersten Gürtellage abgewandte Ende des Stabilisationsfortsatzes von der Unterkante der Reifenwulst einen Abstand im Bereich von 30 bis 90 mm, bevorzugt im Bereich von 40 bis 80 mm, besonders bevorzugt im Bereich von 50 bis 70 mm, aufweist.

Ausgehend von den vorstehend als bevorzugt bezeichneten Abmessungen lassen sich auch vorteilhafte Größenrelationen zwischen dem Stabilisationsfortsatz und dem Umfassungsbereich identifizieren. Bevorzugt ist nämlich ein erfindungsgemäßer Fahrzeugluftreifen, wobei der Stabilisationsfortsatz quer zur Umfangsrichtung bezogen auf die Gesamtbreite des ersten Gürtelumschlags einen Breitennanteil im Bereich von 50 % oder mehr, bevorzugt von 60 % oder mehr, besonders bevorzugt von 70 % oder mehr, aufweist.

Grundsätzlich sind die erfindungsgemäßen Fahrzeugluftreifen hinsichtlich der Form des Stabilisationsfortsatzes relativ flexibel. Mit Blick auf die typische Querschnittsform eines Fahrzeugluftreifens, insbesondere im Bereich der Reifenflanke, hat es sich jedoch als überaus vorteilhaft erwiesen, wenn sich der Stabilisationsfortsatz, welcher in die Reifenflanke hineinragt, in Richtung der Reifenwulst verjüngt, da dies regelmäßig einen besonders guten Formschluss der eingesetzten Bauteile des Fahrzeugluftreifens ermöglicht. Bevorzugt ist demnach ein erfindungsgemäßer Fahrzeugluftreifen, wobei der Stabilisationsfortsatz sich in Richtung des von der ersten Gürtellage abgewandten Endes des Stabilisationsfortsatzes verjüngt.

Bevorzugt ist grundsätzlich auch ein erfindungsgemäßer Fahrzeugluftreifen, wobei der erste Gürtelumschlag am Ende des Randbereichs des Gürtels eine mittlere Dicke im Bereich von im Bereich von 1 bis 12 mm, bevorzugt im Bereich von 2 bis 10 mm, besonders bevorzugt im Bereich von 3 bis 8 mm, aufweist.

Es kann als Vorteil des erfindungsgemäßen Fahrzeugluftreifens angesehen werden, dass der erste Gürtelumschlag durch Materialien beziehungsweise Verbundmaterialien gebildet werden kann, die in der Reifenfertigung ohnehin häufig zum Einsatz kommen. **In** der Praxis wird der erste Gürtelumschlag regelmäßig einen Gummiwerkstoff umfassen. Hierbei ist es prinzipiell möglich, dass in dem Gummiwerkstoff weitere Bestandteile eingebettet sind, beispielsweise Festigkeitsträger, was für bestimmte Anwendungen vorteilhaft sein kann. Nach Einschätzung der Erfinder ist es jedoch für die überwiegende Zahl von Anwendungen besonders bevorzugt, wenn der Gürtelumschlag selbst keine Festigkeitsträger umfasst, sondern im Wesentlichen vollständig aus einem Gummiwerkstoff gebildet wird. Hierdurch kann ein erster Gürtelumschlag erhalten werden, dessen mechanische Eigenschaften besonders gut dafür geeignet sind, die vorgesehene Funktion einer Dämpfung der von der Reifenwulst ausgehenden Impulse zu gewährleisten.

Bevorzugt ist ein erfindungsgemäßer Fahrzeugluftreifen, wobei der erste Gürtelumschlag einen ersten Gummiwerkstoff umfasst, wobei der erste Gummiwerkstoff bevorzugt herstellbar ist durch Vulkanisation einer vulkanisierbaren Kautschukmischung umfassend zumindest einen Dienkautschuk. Bevorzugt ist ebenfalls ein erfindungsgemäßer Fahrzeugluftreifen, wobei der erste Gürtelumschlag einen oder mehrere im ersten Gummiwerkstoff eingebettete Festigkeitsträger umfasst oder im Wesentlichen vollständig aus dem ersten Gummiwerkstoff besteht, wobei der erste Gürtelumschlag bevorzugt aus dem ersten Gummiwerkstoff besteht.

Wie vorstehend erläutert, werden nach Einschätzung der Erfinder besonders leistungsfähige Fahrzeugluftreifen erhalten, wenn der erste Gürtelumschlag im Inneren des Fahrzeugluftreifens zu einem diskontinuierlichen Verlauf der Materialeigenschaften führt, wodurch die Propagation der von der Reifenwulst ausgehenden Deformationen besonders effizient verringert werden kann. Entsprechend ist es bevorzugt, wenn sich der erste Gürtelumschlag hinsichtlich des verwendeten Gummiwerkstoffs von den Gummiwerkstoffen unterscheidet, die in seiner Umgebung auftreten, insbesondere von dem der Reifenkarkasse des Laufstreifens und des ersten Seitenwandelements. Bevorzugt ist somit ein erfindungsgemäßer Fahrzeugluftreifen, wobei der erste Gummiwerkstoff sich hinsichtlich zumindest einer Materialeigenschaft von den weiteren Gummiwerkstoffen unterscheidet, die von der Reifenkarkasse und/oder dem Laufstreifen und/oder dem ersten Seitenwandelement, bevorzugt von der Reifenkarkasse, dem Laufstreifen und dem ersten Seitenwandelement, umfasst sind.

Nach Einschätzung der Erfinder ist hierbei der E-Modul eine der Größen, bei dem ein lokaler Gradient zu einem Unterschied in der Steifigkeit führt, was einen Beitrag zu einer effektiven Dämpfung der auftretenden mechanischen Impulse leisten kann. Bevorzugt ist insoweit als ein erfindungsgemäßer Fahrzeugluftreifen, wobei sich der erste Gummiwerkstoff von den weiteren Gummiwerkstoffen durch einen höheren E-Modul unterscheidet, bevorzugt zumindest um 2 MPa, besonders bevorzugt um zumindest 3 MPa, ganz besonders bevorzugt um zumindest 4 MPa.

Im Rahmen der vorliegenden Erfindung bezeichnet der Ausdruck E-Modul den mittleren dynamischen Speichermodul E', welcher für Gummiwerkstoffe aus einer dynamisch-mechanischen Messung bei 55 °C gemäß DIN 53513:1990-03 ermittelt wird, wobei der mittlere dynamische Speichermodul E' der Mittelwert aus zwei Messungen bei 0,15 % Dehnung und 8 % Dehnung ist.

Die Materialeigenschaft, durch deren Einstellung sich nach Einschätzung der Erfinder jedoch besonders leistungsfähige Gürtelumschläge erhalten lassen, ist das Hystereseverhalten, wobei ein Gummiwerkstoff mit einem geringen Hystereseverhalten es ermöglicht, die Absorption der aus dem Wulstbereich übertragenen Energie möglichst vollständig in einem hierfür optimierten Reifenbauteil stattfinden zu lassen. Die Materialkenngröße, die regelmäßig für die Charakterisierung des Hystereseverhaltens herangezogen wird, ist der Verlustfaktor tan δ = E"/E', welcher den Quotienten aus des Verlustmoduls E" und des Speichermoduls E' bezeichnet. Besonders bevorzugt ist insoweit ein erfindungsgemäßer Fahrzeugluftreifen, wobei sich der erste Gummiwerkstoff von den weiteren Gummiwerkstoffen durch einen niedrigeren Wert für den Verlustfaktor tan δ unterscheidet, und/oder wobei der erste Gummiwerkstoff einen Verlustfaktor tan δ im Bereich von 0,03 bis 0,2, bevorzugt 0,04 bis 0,15, besonders bevorzugt 0,05 bis 0,1, aufweist. Die Bestimmung des Speichermoduls E', des Verlustmoduls E" für die Berechnung von tan δ = E"/E' erfolgt unter Verwendung eines Viskoelastizitäts-Spektrometers in Übereinstimmung mit dem japanischen Industriestandard JIS-K6394 bei einer Temperatur von 30° C, mit einer Frequenz von 10 Hz, einer anfänglichen Deformation von 10 % und einer Amplitude von +- 2 % im Zugversuch.

Es kann als Vorteil des erfindungsgemäßen Fahrzeugluftreifens gesehen werden, dass neben der ersten Gürtellage auch weitere Gürtellagen vorhanden sein können. Wenn zumindest eine weitere Gürtellage vorgesehen wird, ist es nach Einschätzung der Erfinder besonders bevorzugt, wenn diese auf der radial innen liegenden Seite vom Umfassungsbereich des ersten Gürtelumschlags kontaktiert wird, d.h. mit dem ersten Gürtelumschlag in direktem Kontakt steht. Bevorzugt ist folglich ein erfindungsgemäßer Fahrzeugluftreifen, zusätzlich umfassend zwischen der ersten Gürtellage eine zweite Gürtellage und optional weitere Gürtellagen. Bevorzugt ist insbesondere ein erfindungsgemäßer Fahrzeugluftreifen, zusätzlich umfassend zwischen der ersten Gürtellage und dem Laufstreifen eine zweite Gürtellage, wobei der Umfassungsbereich die zweite Gürtellage in radialer Richtung innen kontaktiert, bevorzugt über eine Breite im Bereich von 0,05*b bis 0,3*b, bevorzugt im Bereich von 0,1*b bis 0,25*b, besonders bevorzugt im Bereich von 0,15*b bis 0,2*b, so dass der Umfassungsbereich teilweise zwischen der ersten Gürtellage und der zweiten Gürtellage verläuft.

Zumindest prinzipiell ist es möglich, dass der Umfassungsbereich auch die zweite Gürtellage in radialer Richtung außen kontaktiert und somit sowohl die erste als auch die zweite Gürtellage umfasst bzw. einfasst. Nach Erkenntnis der Erfinder ist diese Anordnung mit Blick auf eine bestmögliche Dämpfung der im Betrieb auftretenden und sich in Richtung des Laufstreifens durchsetzenden Deformationen jedoch explizit weniger bevorzugt. Vor allem für bestimmte Anwendungen bevorzugt ist somit ein erfindungsgemäßer Fahrzeugluftreifen, wobei der Umfassungsbereich die zweite Gürtellage auch in radialer Richtung außen kontaktiert, bevorzugt über eine Breite im Bereich von 0,05*b bis 0,3*b, bevorzugt im Bereich von 0,1*b bis 0,25*b, besonders bevorzugt im Bereich von 0,15*b bis 0,2*b, so dass der Umfassungsbereich die zweite Gürtellage umfasst. Analog eher für einzelne Anwendungen bevorzugt ist ein erfindungsgemäßer Fahrzeugluftreifen, zusätzlich umfassend zwischen der zweiten Gürtellage und dem Laufstreifen eine oder mehrere weitere Gürtellagen, wobei der Umfassungsbereich zumindest eine der weiteren Lage, bevorzugt sämtliche weiteren Lagen, in radialer Richtung innen und/oder außen, bevorzugt innen und außen, kontaktiert.

Tatsächlich hat es sich überraschenderweise als vorteilhaft herausgestellt, wenn lediglich die erste Gürtellage, d.h. die in radialer Richtung dem Laufstreifen am nächsten liegende Gürtellage, auch in radial äußerer Richtung kontaktiert und entsprechend umfasst wird, sodass eine entsprechende Ausgestaltung explizit bevorzugt ist. Besonders bevorzugt ist demnach ein erfindungsgemäßer Fahrzeugluftreifen, wobei der Umfassungsbereich bevorzugt nur die erste Gürtellage auch in radialer Richtung außen kontaktiert, bzw. wobei der Umfassungsbereich die zweite Gürtellage nicht auch in radialer Richtung außen kontaktiert.

Die Lehre der vorliegenden Erfindung wurde vorstehend aus Gründen der Übersichtlichkeit lediglich für eine Seite eines erfindungsgemäßen Fahrzeugluftreifens beschrieben. Der Fachmann erkennt dabei, dass bereits mit einem entsprechenden ersten Gürtelumschlag, wie er vorstehend definiert wird, eine Verringerung der Deformation des Laufstreifens erreicht werden kann, sodass ein verbesserter Fahrzeugluftreifen bereits mit lediglich einem ersten Gürtelumschlag erhalten werden kann. Angesichts des Umstandes, dass bei Fahrzeugluftreifen regelmäßig besonders gleichmäßige Eigenschaften über die gesamte Breite des Fahrzeugluftreifens angestrebt werden, ist für den Fachmann jedoch selbstverständlich, dass erfindungsgemäße Fahrzeugluftreifen ganz besonders bevorzugt sind, die die vorstehend beschriebenen konstruktiven Maßnahmen auf beiden Seiten des Fahrzeugluftreifens umsetzen. Besonders bevorzugt ist somit ein erfindungsgemäßer Fahrzeugluftreifen, wobei die erste Gürtellage in dem dem ersten Gürtelumschlag gegenüberliegenden Randbereich einen zweiten Gürtelumschlag aufweist, welcher die erste Gürtellage mit einem Umfassungsbereich in radialer Richtung innen und außen kontaktiert, wobei der zweite Gürtelumschlag einen am Umfassungsbereich angeordneten Stabilisationsfortsatz aufweist, der sich so durch den Fahrzeugluftreifen erstreckt, dass der Stabilisationsfortsatz abschnittsweise zwischen der Reifenkarkasse und dem Laufstreifen und abschnittsweise zwischen der Reifenkarkasse und einem zweiten Seitenwandelement verläuft, wobei das zweite Seitenwandelement seitlich auf der dem ersten Seitenwandelement gegenüberliegenden Seite angeordnet ist und sich bis zur Reifenwulst erstreckt.

Dem Fachmann ist insoweit klar, dass die jeweiligen Elemente des Fahrzeugluftreifens, insbesondere die Gürtelumschläge und die Seitenwandelemente prinzipiell unabhängig voneinander gemäß der vorstehend beschriebenen bevorzugten Ausführungsform ausgeführt werden können. Insoweit ist jedoch auch klar, dass solche erfindungsgemäßen Fahrzeugluftreifen besonders bevorzugt sind, in denen die entsprechenden Elemente auf beiden Seiten des Fahrzeugluftreifens gleichartig ausgeführt sind.

Nachfolgend werden bevorzugte Ausführungsformen der Erfindung unter Bezugnahme auf die beiliegende Figur näher erläutert und beschrieben. Dabei zeigt:

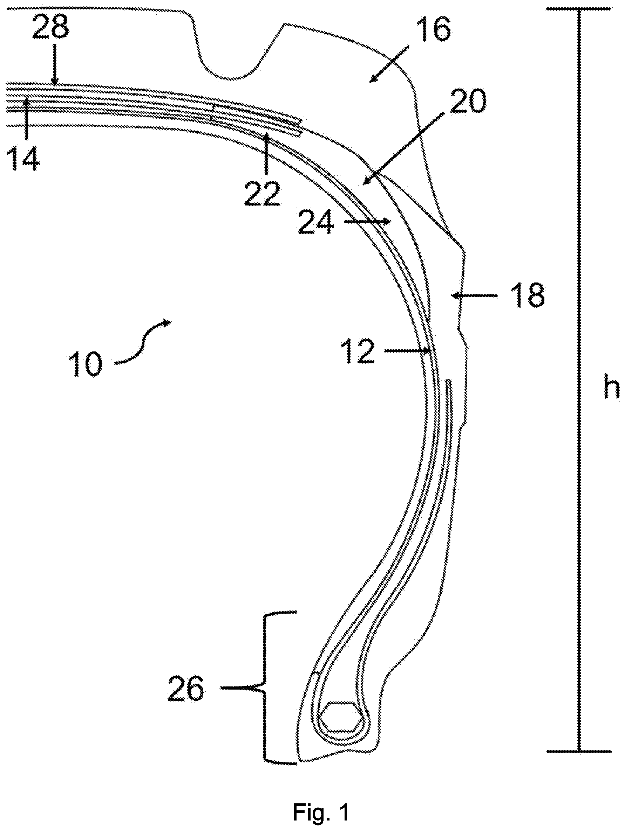

- Fig. 1: eine schematische Querschnittsdarstellung der Flanke eines beispielhaften erfindungsgemäßen Fahrzeugluftreifens in einer bevorzugten Ausführungsform.

Fig. 1 zeigt eine schematische Darstellung der Flanke eines beispielhaften erfindungsgemäßen Fahrzeugluftreifens 10 in einer bevorzugten Ausführungsform. Der Fahrzeugluftreifen 10 umfasst eine Reifenkarkasse 12, welche in üblicher Weise am unteren Ende um einen Wulstkern umgeschlagen ist, um den Reifenwulst 26 zu bilden. Auf der radial innen liegenden Seite der Reifenkarkasse 12 ist eine Reifeninnenschicht angebracht.

Relativ zur Reifenkarkasse 12 radial außen liegend umfasst der Fahrzeugluftreifen 10 einen Laufstreifen 16. Zwischen der Reifenkarkasse 12 und dem Laufstreifen 16 sind eine erste Gürtellage 14 und darüber, d.h. in radialer Richtung außen, eine zweite Gürtellage 28 angeordnet. An der Flanke des Fahrzeugluftreifens 10 erstreckt sich ein Seitenwandelement 18, welches vorliegend als einteilige Seitenwand ausgeführt ist und sich bis zur Reifenwulst 26 erstreckt.

In dem gezeigten Beispiel umfasst die Reifenkarkasse 12 lediglich eine Karkasslage, welche eine Vielzahl von textilen Festigkeitsträgern umfasst, die in üblicher Weise in einem Gummiwerkstoff eingebettet sind. Die erste Gürtellage 14 und die zweite Gürtellage 28 umfassen jeweils eine Vielzahl von metallischen Festigkeitsträgern, welche aus Stahl ausgebildet sind. Auch diese sind jeweils in einem Gummiwerkstoff eingebettet.

In Fig. 1 ist deutlich zu erkennen, dass die erste Gürtellage 14 in ihrem Randbereich einen Gürtelumschlag 20 aufweist, der sich im gezeigten Beispiel über den gesamten Umfang der ersten Gürtellage 14 erstreckt. Mit dem Umfassungsbereich 22 des ersten Gürtelumschlags 20 wird die erste Gürtellage 14 in radialer Richtung innen und außen, d.h. in der Figur 1 unterhalb und oberhalb, kontaktiert. Im Gegensatz hierzu wird die zweite Gürtellage 28 nicht auf beiden Seiten, sondern lediglich an der radial innen liegenden Seite kontaktiert. Von dem Umfassungsbereich 22 weg erstreckt sich ein Stabilisationsfortsatz 24, der in dem in Fig. 1 gezeigten Beispiel so zwischen der Reifenkarkasse 12 und dem Laufstreifen 16 beziehungsweise anschließend zwischen der Reifenkarkasse 12 und dem ersten Seitenwandelement 18 verläuft, dass er abschnittsweise sowohl die Reifenkarkasse 12 als auch den Laufstreifen 16 beziehungsweise das Seitenelement 18 unmittelbar berührt, sodass bei der Vulkanisation des vorangehenden Reifenrohlings eine stoffschlüssige Verbindung zwischen dem Stabilisationsfortsatz 24 und den ihn umgebenden Elementen erreicht wurde. Der Stabilisationsfortsatz 24 verjüngt sich in Richtung des Reifenwulstes 26.

Die Breite des ersten Gürtelumschlags 20 beträgt -gemessen entlang der radial außen liegenden Kontur- etwa 45% der Höhe h des Fahrzeugluftreifens 10, welche von der Unterkante der Reifenwulst 26 bis zur Oberseite des Laufstreifens 16 gemessen wird. Der Umfassungsbereich 22 verläuft auf beiden Seiten der ersten Gürtellage 14 über eine Strecke, die etwa 14% der Breite der ersten Gürtellage 14 entspricht.

Das von der ersten Gürtellage 14 abgewandte Ende des Stabilisationsfortsatzes 24 hat von der Unterkante der Reifenwulst 26 einen Abstand, der etwa 58% der Reifenhöhe h des Fahrzeugluftreifens 10 entspricht. Bezogen auf die Gesamtbreite des ersten Gürtelumschlags 20 hat der Stabilisationsfortsatz 24 einen Breitenanteil von etwa 75%.

In dem Beispiel der Fig. 1 unterscheidet sich der erste Gummiwerkstoff, aus dem der erste Gürtelumschlag 20 besteht, von den Gummiwerkstoffen der umgebenden Reifenkomponenten, wobei der erste Gummiwerkstoff einen Verlustfaktor tan δ = E"/E' von etwa 0,06 aufweist.

### Bezugszeichenliste

- 10: Fahrzeugluftreifen
- 12: Reifenkarkasse
- 14: Erste Gürtellage
- 16: Laufstreifen
- 18: Erstes Seitenwandelement
- 20: Erster Gürtelumschlag
- 22: Umfassungsbereich
- 24: Stabilisationsfortsatz
- 26: Reifenwulst
- 28: Zweite Gürtellage

## Patentansprüche

1. Fahrzeugluftreifen (10), umfassend:
a) eine Reifenkarkasse (12),
b) eine relativ zur Reifenkarkasse (12) radial außenliegende erste Gürtellage (14),
c) einen relativ zur Reifenkarkasse (12) und zu der ersten Gürtellage (14) radial außenliegenden Laufstreifen (16), und
d) ein seitlich am Fahrzeugluftreifen angeordnetes erstes Seitenwandelement (18), welches sich bis zur Reifenwulst (26) erstreckt,
**dadurch gekennzeichnet, dass** die erste Gürtellage (14) im Randbereich zumindest abschnittsweise einen ersten Gürtelumschlag (20) aufweist, welcher die erste Gürtellage (14) mit einem Umfassungsbereich (22) in radialer Richtung innen und außen kontaktiert, wobei der erste Gürtelumschlag (20) einen am Umfassungsbereich (22) angeordneten Stabilisationsfortsatz (24) aufweist, der sich so durch den Fahrzeugluftreifen (10) erstreckt, dass der Stabilisationsfortsatz (24) abschnittsweise zwischen der Reifenkarkasse (12) und dem Laufstreifen (16) und abschnittsweise zwischen der Reifenkarkasse (12) und dem ersten Seitenwandelement (18) verläuft,
wobei der Stabilisationsfortsatz (24) nahtlos in den Umfassungsbereich (22) übergeht, so dass der Umfassungsbereich (22) und der Stabilisationsfortsatz (24) Teilbereiche des ersten Gürtelumschlags (20) sind,
wobei der Stabilisationsfortsatz (24) so angeordnet ist, dass das von der ersten Gürtellage (14) abgewandte Ende des Stabilisationsfortsatzes (24) von der Unterkante der Reifenwulst (26) einen Abstand im Bereich von 0,3*h bis 0,7*h aufweist, wobei h die Höhe des Fahrzeugluftreifens (10) ist, gemessen von der Unterkante der Reifenwulst (26) bis zur Oberseite des Laufstreifens (16), und
wobei der Umfassungsbereich (22) die erste Gürtellage (14) quer zur Umfangsrichtung in radialer Richtung innen und außen über eine Breite im Bereich von 0,05*b bis 0,2*b, kontaktiert, wobei b die Breite der ersten Gürtellage (14) quer zur Umfangsrichtung ist.

2. Fahrzeugluftreifen (10) nach Anspruch 1, wobei der Stabilisationsfortsatz (24) abschnittweise die Reifenkarkasse (12) und/oder den Laufstreifen (16) und/oder das erste Seitenwandelement (18), bevorzugt die Reifenkarkasse (12) und den Laufstreifen (16) und/oder das erste Seitenwandelement (18), besonders bevorzugt die Reifenkarkasse (12), den Laufstreifen (16) und das erste Seitenwandelement (18), kontaktiert.

3. Fahrzeugluftreifen (10) nach einem der Ansprüche 1 oder 2, wobei der erste Gürtelumschlag (20) quer zur Umfangsrichtung eine Breite im Bereich von 0,3*h bis 0,7*h, bevorzugt im Bereich von 0,4*h bis 0,6*h, besonders bevorzugt im Bereich von 0,45*h bis 0,55*h, aufweist, wobei h die Höhe des Fahrzeugluftreifens (10) ist, gemessen von der Unterkante der Reifenwulst (26) bis zur Oberseite des Laufstreifens (16).

4. Fahrzeugluftreifen (10) nach einem der Ansprüche 1 bis 3, wobei der Stabilisationsfortsatz (24) so angeordnet ist, dass das von der ersten Gürtellage (14) abgewandte Ende des Stabilisationsfortsatzes (24) von der Unterkante der Reifenwulst (26) einen Abstand im Bereich von 0,4*h bis 0,65*h, bevorzugt im Bereich von 0,5*h bis 0,6*h, aufweist, wobei h die Höhe des Fahrzeugluftreifens (10) ist, gemessen von der Unterkante der Reifenwulst (26) bis zur Oberseite des Laufstreifens (16).

5. Fahrzeugluftreifen (10) nach einem der Ansprüche 1 bis 4, wobei der Stabilisationsfortsatz (24) quer zur Umfangsrichtung bezogen auf die Gesamtbreite des ersten Gürtelumschlags (20) einen Breitenanteil im Bereich von 50 % oder mehr, bevorzugt von 60 % oder mehr, besonders bevorzugt von 70 % oder mehr, aufweist.

6. Fahrzeugluftreifen (10) nach einem der Ansprüche 1 bis 5, wobei der erste Gürtelumschlag einen ersten Gummiwerkstoff umfasst, wobei der erste Gummiwerkstoff sich hinsichtlich zumindest einer Materialeigenschaft von den weiteren Gummiwerkstoffen unterscheidet, die von der Reifenkarkasse (12) und/oder dem Laufstreifen (16) und/oder dem ersten Seitenwandelement (18), bevorzugt von der Reifenkarkasse (12), dem Laufstreifen (16) und dem ersten Seitenwandelement (18), umfasst sind, wobei sich der erste Gummiwerkstoff von den weiteren Gummiwerkstoffen bevorzugt durch einen höheren E-Modul unterscheidet, wobei der E-Modul der mittlere dynamische Speichermodul E' ist, welcher aus einer dynamisch-mechanischen Messung bei 55 °C gemäß DIN 53513:1990-03 ermittelt wird, wobei der mittlere dynamische Speichermodul E' der Mittelwert aus zwei Messungen bei 0,15 % Dehnung und 8 % Dehnung ist.

7. Fahrzeugluftreifen (10) nach einem der Ansprüche 1 bis 6, wobei der erste Gürtelumschlag einen ersten Gummiwerkstoff umfasst, wobei der erste Gummiwerkstoff einen Verlustfaktor tan δ im Bereich von 0,03 bis 0,2, bevorzugt 0,04 bis 0,15, besonders bevorzugt 0,05 bis 0,1, aufweist, wobei der Verlustfaktor tan δ = E"/E' den Quotienten aus dem Verlustmodul E" und dem Speichermodul E' bezeichnet, wobei die Bestimmung des Speichermoduls E' und des Verlustmoduls E" für die Berechnung von tan δ = E"/E' unter Verwendung eines Viskoelastizitäts-Spektrometers in Übereinstimmung mit dem japanischen Industriestandard JIS-K6394 bei einer Temperatur von 30° C, mit einer Frequenz von 10 Hz, einer anfänglichen Deformation von 10 % und einer Amplitude von +- 2 % im Zugversuch erfolgt.

8. Fahrzeugluftreifen (10) nach einem der Ansprüche 1 bis 7, zusätzlich umfassend zwischen der ersten Gürtellage (14) und dem Laufstreifen (16) eine zweite Gürtellage (28), wobei der Umfassungsbereich (22) die zweite Gürtellage (28) in radialer Richtung innen kontaktiert, bevorzugt über eine Breite im Bereich von 0,05*b bis 0,3*b, bevorzugt im Bereich von 0,1*b bis 0,25*b, besonders bevorzugt im Bereich von 0,15*b bis 0,2*b, so dass der Umfassungsbereich (22) teilweise zwischen der ersten Gürtellage (14) und der zweiten Gürtellage (28) verläuft.

9. Fahrzeugluftreifen (10) nach Anspruch 8, wobei der Umfassungsbereich (22) die zweite Gürtellage (28) nicht auch in radialer Richtung außen kontaktiert.

## Claims

1. Pneumatic vehicle tyre (10), comprising:
a) a tyre carcass (12),
b) a first belt ply (14) lying radially outside relative to the tyre carcass (12),
c) a tread (16) lying radially outside relative to the tyre carcass (12) and to the first belt ply (14), and
d) a first sidewall element (18) which is disposed laterally on the pneumatic vehicle tyre and extends to the tyre bead (26),
**characterized in that** the first belt ply (14) has at least in portions in the peripheral region a first belt wrap (20) which by way of an enclosing region (22) contacts the first belt ply (14) on the inside and outside in the radial direction, wherein the first belt wrap (20) has a stabilization appendage (24) which is disposed on the enclosing region (22) and extends through the pneumatic vehicle tyre (10) in such a way that the stabilization appendage (24) extends in portions between the tyre carcass (12) and the tread (16), and in portions between the tyre carcass (12) and the first sidewall element (18),
wherein the stabilization appendage (24) transitions seamlessly into the enclosing region (22), so that the enclosing region (22) and the stabilization appendage (24) are sub-regions of the first belt wrap (20),
wherein the stabilization appendage (24) is disposed in such a way that the end of the stabilization appendage (24) facing away from the first belt ply (14) has a spacing from the lower edge of the tyre bead (26) in the range of 0.3*h to 0.7*h, where h is the height of the pneumatic vehicle tyre (10), measured from the lower edge of the tyre bead (26) to the upper side of the tread (16), and
wherein the enclosing region (22) inside and outside contacts the first belt ply (14) transversely to the circumferential direction in the radial direction over a width in the range of 0.05*b to 0.2*b, where b is the width of the first belt ply (14) transversely to the circumferential direction.

2. Pneumatic vehicle tyre (10) according to Claim 1, wherein the stabilization appendage (24) contacts in portions the tyre carcass (12) and/or the tread (16) and/or the first sidewall element (18), preferably the tyre carcass (12) and the tread (16) and/or the first sidewall element (18), particularly preferably the tyre carcass (12), the tread (16) and the first sidewall element (18).

3. Pneumatic vehicle tyre (10) according to one of Claims 1 and 2, wherein the first belt wrap (20) has, transversely to the circumferential direction, a width in the range of 0.3*h to 0.7*h, preferably in the range of 0.4*h to 0.6*h, particularly preferably in the range of 0.45*h to 0.55*h, where h is the height of the pneumatic vehicle tyre (10) measured from the lower edge of the tyre bead (26) to the upper side of the tread (16).

4. Pneumatic vehicle tyre (10) according to one of Claims 1 to 3, wherein the stabilization appendage (24) is disposed in such a way that the end of the stabilization appendage (24) facing away from the first belt ply (14) has a spacing from the lower edge of the tyre bead (26) in the range of 0.4*h to 0.65*h, preferably in the range of 0.5*h to 0.6*h, where h is the height of the pneumatic vehicle tyre (10) measured from the lower edge of the tyre bead (26) to the upper side of the tread (16).

5. Pneumatic vehicle tyre (10) according to any one of Claims 1 to 4, wherein the stabilization appendage (24) has perpendicular to the circumferential direction a width component in the range of 50% or more, preferably of 60% or more, particularly preferably of 70% or more, in terms of the overall width of the first belt wrap (20).

6. Pneumatic vehicle tyre (10) according to one of Claims 1 to 5, wherein the first belt wrap comprises a first rubber material, wherein the first rubber material differs from the further rubber materials in terms of at least one material property included in the tyre carcass (12) and/or the tread (16) and/or the first sidewall element (18), preferably the tyre carcass (12), the tread (16) and the first sidewall element (18), wherein the first rubber material is preferably distinguished from the other rubber materials by a higher modulus of elasticity, wherein the modulus of elasticity is the mean dynamic storage modulus E' which is determined from a dynamic-mechanical measurement at 55°C according to **DIN** 53513:1990-03, where the mean dynamic storage modulus E' is the mean value of two measurements at 0.15% elongation and 8% elongation.

7. Pneumatic vehicle tyre (10) according to one of Claims 1 to 6, wherein the first belt wrap comprises a first rubber material, wherein the first rubber material has a loss factor tan δ in the range of 0.03 to 0.2, preferably 0.04 to 0.15, particularly preferably 0.05 to 0.1, where the loss factor tan δ = E"/E' is the quotient of the loss modulus E" and the storage modulus E', where the determination of the storage modulus E' and the loss modulus E" for the calculation of tan δ = E"/E' is performed using a viscoelastic spectrometer in accordance with the Japanese industry standard JIS-K6394 at a temperature of 30°C, at a frequency of 10 Hz, an initial deformation of 10% and an amplitude of +- 2% in the tensile test.

8. Pneumatic vehicle tyre (10) according to one of Claims 1 to 7, additionally comprising a second belt ply (28) between the first belt ply (14) and the tread (16), wherein the enclosing region (22) contacts the second belt ply (28) inside in the radial direction, preferably over a width in the range of 0.05*b to 0.3*b, preferably in the range of 0.1 *b to 0.25*b, particularly preferably in the range of 0.15*b to 0.2*b, so that the enclosing region (22) partially extends between the first belt ply (14) and the second belt ply (28).

9. Pneumatic vehicle tyre (10) according to Claim 8, wherein the enclosing region (22) also does not contact the second belt ply (28) outside in the radial direction.

## Revendications

1. Pneu de véhicule (10), comprenant :
a) une carcasse de pneu (12),
b) une première couche de ceinture (14) située radialement à l'extérieur par rapport à la carcasse de pneu (12),
c) une bande de roulement (16) située radialement à l'extérieur par rapport à la carcasse de pneu (12) et à la première couche de ceinture (14), et
d) un premier élément de paroi latérale (18) disposé latéralement sur le pneu de véhicule, qui s'étend jusqu'au talon du pneu (26),
**caractérisé en ce que** la première couche de ceinture (14) présente dans la zone de bordure, au moins par sections, un premier repli de ceinture (20) qui met en contact la première couche de ceinture (14) avec une zone d'enveloppement (22) dans la direction radiale à l'intérieur et à l'extérieur, le premier repli de ceinture (20) présentant un prolongement de stabilisation (24) disposé sur la zone d'enveloppement (22), qui s'étend à travers le pneu de véhicule (10) de telle sorte que le prolongement de stabilisation (24) s'étend par sections entre la carcasse de pneu (12) et la bande de roulement (16) et par sections entre la carcasse de pneu (12) et le premier élément de paroi latérale (18),
le prolongement de stabilisation (24) se fondant sans transition dans la zone d'enveloppement (22), de sorte que la zone d'enveloppement (22) et le prolongement de stabilisation (24) sont des zones partielles du premier repli de ceinture (20),
le prolongement de stabilisation (24) étant disposé de telle sorte que l'extrémité du prolongement de stabilisation (24) opposée à la première couche de ceinture (14) se trouve à une distance du bord inférieur du talon de pneu (26) dans la plage de 0,3*h à 0,7*h, h étant la hauteur du pneu de véhicule (10) mesurée depuis le bord inférieur du talon de pneu (26) jusqu'à la face supérieure de la bande de roulement (16), et
dans lequel la zone d'enveloppement (22) est en contact avec la première couche de ceinture (14) transversalement à la direction circonférentielle dans la direction radiale à l'intérieur et à l'extérieur sur une largeur dans la plage de 0,05*b à 0,2*b,
où b est la largeur de la première couche de ceinture (14) transversalement à la direction circonférentielle.

2. Pneu de véhicule (10) selon la revendication 1, dans lequel le prolongement de stabilisation (24) entre en contact par sections avec la carcasse de pneu (12) et/ou la bande de roulement (16) et/ou le premier élément de paroi latérale (18), de préférence la carcasse de pneu (12) et la bande de roulement (16) et/ou le premier élément de paroi latérale (18), de manière particulièrement préférée la carcasse de pneu (12), la bande de roulement (16) et le premier élément de paroi latérale (18).

3. Pneu de véhicule (10) selon l'une des revendications 1 ou 2, dans lequel le premier repli de ceinture (20) présente, transversalement à la direction circonférentielle, une largeur dans la plage de 0,3*h à 0,7*h, de préférence dans la plage de 0,4*h à 0,6*h, de manière particulièrement préférée dans la plage de 0,45*h à 0,55*h, h étant la hauteur du pneu de véhicule (10), mesurée depuis le bord inférieur du talon de pneu (26) jusqu'à la face supérieure de la bande de roulement (16).

4. Pneu de véhicule (10) selon l'une des revendications 1 à 3, dans lequel le prolongement de stabilisation (24) est disposé de telle sorte que l'extrémité du prolongement de stabilisation (24) opposée à la première couche de ceinture (14) se trouve à une distance du bord inférieur du talon de pneu (26) dans la plage de 0,4*h à 0,65*h, de préférence dans la plage de 0,5*h à 0,6*h, h étant la hauteur du pneu de véhicule (10) mesurée depuis le bord inférieur du talon de pneu (26) jusqu'à la face supérieure de la bande de roulement (16).

5. Pneu de véhicule (10) selon l'une des revendications 1 à 4, dans lequel le prolongement de stabilisation (24) présente, transversalement à la direction circonférentielle, par rapport à la largeur totale du premier repli de ceinture (20), une proportion de largeur dans la plage de 50 % ou plus, de préférence de 60 % ou plus, de manière particulièrement préférée de 70 % ou plus.

6. Pneu de véhicule (10) selon l'une quelconque des revendications 1 à 5, dans lequel le premier repli de ceinture comprend un premier matériau de caoutchouc, le premier matériau de caoutchouc se distinguant des autres matériaux de caoutchouc qui sont utilisés par la carcasse de pneu (12) et/ou la bande de roulement (16) et/ou le premier élément de paroi latérale (18) en ce qui concerne au moins une propriété de matériau, de préférence par la carcasse de pneu (12), la bande de roulement (16) et le premier élément de paroi latérale (18), le premier matériau de caoutchouc se distinguant de préférence des autres matériaux de caoutchouc par un module d'élasticité plus élevé, le module d'élasticité étant le module de conservation dynamique moyen E', qui est déterminé à partir d'une mesure mécanique dynamique à 55 °C selon DIN 53513:1990-03, le module de conservation dynamique moyen E' étant la valeur moyenne de deux mesures à 0,15 % d'allongement et à 8 % d'allongement.

7. Pneu de véhicule (10) selon l'une quelconque des revendications 1 à 6, dans lequel le premier repli de ceinture comprend un premier matériau de caoutchouc, le premier matériau de caoutchouc ayant un facteur de perte tan δ dans la plage de 0,03 à 0,2, de préférence dans la plage de 0,04 à 0,15, de manière particulièrement préférée dans la plage de 0,05 à 0,1, le facteur de perte tan δ = E"/E' désignant le quotient du module de perte E" et du module de conservation E', la détermination du module de conservation E' et du module de perte E" pour le calcul de tan δ = E"/E' étant effectuée en utilisant un spectromètre de viscoélasticité conformément à la norme industrielle japonaise JIS-K6394 à une température de 30 °C, avec une fréquence de 10 Hz, une déformation initiale de 10 % et une amplitude de ± 2 % dans un essai de traction.

8. Pneu de véhicule (10) selon l'une des revendications 1 à 7, comprenant en outre une deuxième couche de ceinture (28) entre la première couche de ceinture (14) et la bande de roulement (16), la zone d'enveloppement (22) étant en contact avec la deuxième couche de ceinture (28) dans la direction radiale vers l'intérieur, de préférence sur une largeur dans la plage de 0,05*b à 0,3*b, de préférence dans la plage de 0,1*b à 0,25*b, de manière particulièrement préférée dans la plage de 0,15*b à 0,2*b, de sorte que la zone d'enveloppement (22) s'étend partiellement entre la première couche de ceinture (14) et la deuxième couche de ceinture (28).

9. Pneu de véhicule (10) selon la revendication 8, dans lequel la zone d'enveloppement (22) n'est pas également en contact avec la deuxième couche de ceinture (28) dans la direction radiale vers l'extérieur.
